## Europäisches Patentamt
## European Patent Office
## Office européen des brevets

(11) Veröffentlichungsnummer: **0 040 411**
**B1**

(12) # EUROPÄISCHE PATENTSCHRIFT

(45) Veröffentlichungstag der Patentschrift:
19.09.84

(51) Int. Cl.³: **B 01 D 13/00**, C 02 F 1/14

(21) Anmeldenummer: **81103729.0**

(22) Anmeldetag: **15.05.81**

(54) **Vorrichtung zum Trennen von Stoffgemischen in flüssiger Phase.**

(30) Priorität: **21.05.80 DE 3019355**

(43) Veröffentlichungstag der Anmeldung:
**25.11.81 Patentblatt 81/47**

(45) Bekanntmachung des Hinweises auf die Patenterteilung:
**19.09.84 Patentblatt 84/38**

(84) Benannte Vertragsstaaten:
**AT BE DE FR GB IT NL**

(56) Entgegenhaltungen:
**FR - A - 2 429 032**
**US - A - 2 445 350**
**US - A - 3 340 186**
**US - A - 3 406 096**
**US - A - 3 415 719**
**US - A - 3 563 860**

(73) Patentinhaber: **HOECHST AKTIENGESELLSCHAFT,**
**Postfach 80 03 20, D-6230 Frankfurt am Main 80 (DE)**

(72) Erfinder: **Disselbeck, Dieter, Am Rehsteig 3, D-6232 Bad Soden am Taunus (DE)**
Erfinder: **Speier, Klaus, Dr., Im Schulzehnten 40, D-6233 Kelkheim (Taunus) (DE)**

## Beschreibung

Die Erfindung betrifft eine Vorrichtung zum Trennen von Stoffgemischen in flüssiger Phase mit Hilfe von Solarenergie in Gestalt eines flachen Hohlkörpers aus flüssigkeitsdichtem Material mit Oberseite und Unterseite, welcher Hohlkörper einen ersten Hohlraum enthält, dessen Unterseite von der Unterseite des Hohlkörpers gebildet wird und der eine flüssigkeitsdichte Oberseite besitzt; und welcher Hohlkörper einen zweiten Hohlraum enthält, dessen Unterseite die Oberseite des ersten Hohlraums ist, und dessen Oberseite flüssigkeitsdicht, aber dampfundurchlässig ist; und welcher Hohlkörper einen dritten Hohlraum enthält, dessen Unterseite die Oberseite des zweiten Hohlraums ist, und dessen Oberseite die Oberseite des Hohlkörpers ist; welcher Hohlkörper eine Anschlußvorrichtung für die Flüssigkeit in den ersten Hohlraum, ein den zweiten Hohlraum überbrückendes Rohr in den dritten Hohlraum, eine Ausflußvorrichtung aus dem dritten Hohlraum, einen Abflußstutzen aus dem zweiten Hohlraum aufweist.

Die bekannteste Methode zur Trennung von Stoffgemischen in flüssiger Phase ist das Destillationsverfahren. Hierbei wird das Stoffgemisch unter Zufuhr von Wärmeenergie bis zum Siedepunkt einer der in dem Stoffgemisch enthaltenen Komponente erhitzt. Zur Verdampfung ist ein beträchtlicher Energieeinsatz erforderlich, der üblicherweise aus fossilen Brennstoffen gewonnen wird. In zunehmendem Maße werden fossile Brennstoffe knapp und teuer, so daß auch für die Trennung von Stoffgemischen die Nutzung alternativer Energiequellen von Interesse ist.

Ebenfalls ist es bekannt, beispielsweise zur Meerwasserentsalzung halbdurchlässige Membranen zu verwenden, die das Salz nicht durchtreten lassen (siehe DE-OS 2 910 413, JA-OS 49 096 976, JA-OS 53 090 367 und JA-OS 53 095 183). Darüber hinaus sind semipermeable Folien aus Polytetrafluorethylen bekannt und im Handel erhältlich. Beschrieben sind des weiteren auf textilen Gebilden befestigte semipermeable Folien (JA-OS 78 018 463).

Aus der US-Patentschrift 3 563 860 ist eine Vorrichtung zum Meerwasser-Entsalzen bekannt, die aus einer ersten und einer zweiten und einer dritten Kammer besteht. Das zugeführte Salzwasser fließt kalt zunächst in die zweite Kammer mit undurchlässiger Unterseite, welche gleichzeitig die Oberseite der dritten Kammer bildet. Nach Verlassen der zweiten Kammer durchfließt das Salzwasser eine separate Heizvorrichtung und kommt heiß in die erste Kammer. Durch deren semipermeable Oberwand diffundiert Wasserdampf in die an ihrer Oberseite gekühlte dritte Kammer, wo es sich niederschlägt und als Süßwasserkondensat abgezogen wird.

Diese bekannten Verfahren und Vorrichtungen zum Trennen von Stoffgemischen in flüssiger Phase, z. B. zum Entsalzen von Meerwasser, können jedoch noch nicht in jeder Hinsicht befriedigen, da sich immer wieder verfahrenstechnische und konstruktive Schwierigkeiten ergeben.

Die Erfindung hat sich deshalb die Aufgabe gestellt, eine einfache Vorrichtung zur Verfügung zu stellen, die es gestattet, Stoffgemische in der flüssigen Phase zu trennen.

Dieses Ziel wurde erfindungsgemäß dadurch erreicht, daß bei einer Vorrichtung der eingangs beschriebenen Art die Oberseite des Hohlkörpers eine Sonnenstrahlen absorbierenden Schicht trägt, und daß der erste und der dritte Hohlraum jeweils aus einem beschichteten Doppelgewebe mit Abstandhalterfäden bestehen.

Die strahlungsabsorbierende Begrenzungsfläche des Hohlkörpers ist vorteilhaft mit einer schwarz eingefärbten Beschichtung aus synthetischen Materialien versehen, beispielsweise Polyvinylchlorid, Kautschuk oder Polytetrafluorethylen.

Die dieser strahlungsabsorbierenden Begrenzungsfläche des Hohlkörpers gegenüberliegende Begrenzungsfläche ist mit einer flüssigkeitsundurchlässigen, dampfdurchlässigen Membrane versehen, beispielsweise aus Polytetrafluorethylen.

In einer anderen vorteilhaften Ausführungsform der erfindungsgemäßen Vorrichtung ist der flache Hohlköper starr, beispielsweise aus Kunststoff oder Metall, seine eine Begrenzungsfläche ist flüssigkeitsdicht und strahlungsabsorbierend, während die gegenüberliegende Fläche durch Perforation und Beschichtung flüssigkeitsdicht, aber dampfdurchlässig ist.

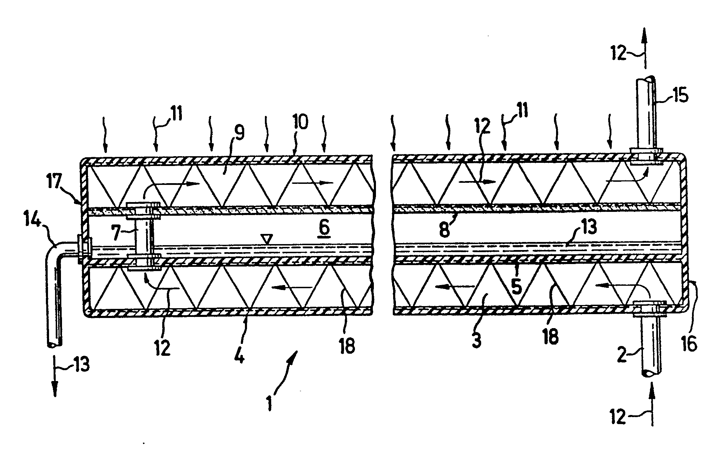

Die Erfindung wird in der Figur näher erläutert, die einen Querschnitt durch eine Ausführung der Vorrichtung zeigt.

In der Figur bedeuten 1 Hohlkörper, 2 Anschlußvorrichtung, 3 erster Hohlraum, 4 Unterseite des Hohlkörpers und des ersten Hohlraumes, 5 Unterseite des zweiten Hohlraumes, 6 zweiter Hohlraum, 7 Rohr, 8 Oberseite des zweiten Hohlraumes, 9 dritter Hohlraum, 10 Oberseite des Hohlkörpers und des dritten Hohlraumes, 11 Wärmestrahlung, 12 Flüssigkeit, 13 Kondensat, 14 Abflußstutzen, 15 Ausflußvorrichtung, 16 und 17 Außenwände, 18 Abstandshalterfäden.

Die Flüssigkeit 12, beispielsweise Meerwasser wird durch die Anschlußvorrichtung 2 in den ersten Hohlraum 3 des Hohlkörpers 1 geleitet. Die Unterseite 4 des Hohlkörpers 1, die gleichzeitig auch Unterseite des ersten Hohlraumes 3 ist, ist ebenso wie die kleineren Seiten 16 und 17 des Hohlkörpers, für die Flüssigkeit 12 undurchlässig; dasselbe trifft für die Unterseite 5 des zweiten Hohlraumes zu. Diese Undurchlässigkeit kann entweder durch Verwendung von Materialien, wie Folien, Kunststoffe oder Metallen, erfolgen, die von Anbeginn für die Flüssigkeit 12 dicht sind, oder sie kann bei Verwendung beispielsweise von Geweben, Vliesen oder anderen textilen Gebilden durch Beschichten oder Kaschieren mit Kunststoff oder Folien erzielt werden.

Im ersten Hohlraum 3 nimmt die Flüssigkeit 12 die Wärme auf, die bei der Bildung des Kondensats 13 im zweiten Hohlraum 6 freigesetzt worden ist. Die so vorgewärmte Flüssigkeit 12 wird dann durch ein Rohr 7 direkt in den dritten Hohlraum 9 geführt. Dieser dritte Hohlraum 9 besteht auf seiner Unterseite aus der Oberseite 8 des zweiten Hohlraumes 6, die für die abzutrennende Flüssigkeit semipermeabel ist, d. h. der Dampf der Flüssigkeit kann durch die Oberseite 8 des zweiten Hohlraumes 6 durchtreten, nicht aber die Flüssigkeit selbst. Die flüssigkeitsdichte, aber dampfdurchlässige Oberseite 8 des zweiten Hohlraumes 6 wird vorteilhaft gebildet aus einem Polytetrafluoroethylenvlies.

Zweckmäßig sind diese semipermeablen Membranen unterstützt durch eine textile Schicht, z. B. können in der Oberseite 8 des zweiten Hohlraumes 6 und Oberseite 10 des Hohlkörpers die Unter- und Oberseite eines Doppelgewebes sein, die mit Hilfe von Abstandshalterfäden 18 voneinander auf Abstand gehalten werden.

Ebenfalls sind die Unterseite 4 des Hohlkörpers 1 und die Unterseite 5 des zweiten Hohlraums 6 bevorzugt die beiden Gewebe einer Doppelgewebebahn mit Abstandshalterfäden.

Die Oberseite 10 des Hohlkörpers (und des dritten Hohlraumes) ist strahlungsabsorbierend; beispielsweise ist im Beschichtungsmaterial Ruß eingearbeitet. Dadurch wird auffallende Sonnenstrahlung 11 besonders gut absorbiert und die Flüssigkeit 12 erwärmt sich im dritten Hohlraum 9 so weit, daß zumindest ein Teil verdunstet oder verdampft und in Dampfform durch die Poren der Oberseite 8 des zweiten Hohlraums 6 diffundiert, wo sich der Dampf unter der kühlenden Wirkung der frisch in den ersten Hohlraum 3 zuströmenden Flüssigkeit 12 zum Kondensat 13 umwandelt, das über den Abflußstutzen 14 abgezogen wird. Die nicht verdampften Teile der Flüssigkeit 12 verlassen den dritten Hohlraum 9 durch die Abflußvorrichtung 15.

Die Beispiele 1 und 2 erläutern die Erfindung noch besser.

## Beispiel 1

Eine vorteilhafte Anwendung des erfindungsgemäßen Verfahrens und der erfindungsgemäßen Vorrichtung ist die Meerwasserentsalzung. Ein Hohlkörper 1 hatte 1 m² Oberseite 10, die ein Teil eines Doppelgewebes mit 4 mm Abstand zwischen den Gewebebahnen war. Die Oberseite 10 war beschichtet mit einer Mischung aus PVC und Ruß.

Die Unterseite dieses Doppelgewebes, also die Oberseite 8 des zweiten Hohlraumes 6 trug zusätzlich zum Gewebe eine mikroporöse Membrane aus Polytetrafluorethylen, die etwa 1,4 Milliarden Poren pro cm² und eine maximale Porengröße von 0,2 µm aufwies.

Der erste Hohlraum wurde gebildet von einem zweiten Doppelgewebe mit Abstandshalterfäden aus Polyester mit beidseitiger Beschichtung aus PVC.

Der Abstand von mikroporöser Membran an der Oberseite des zweiten Hohlraumes bis zur Unterseite 5 des zweiten Hohlraumes betrug 20 mm.

Bei einer Durchflußmenge von 10 l/h 3,5gew.-%iger Kochsalzlösung durch den Hohlkörper 1 mit einer Eintrittstemperatur von 10°C kondensierten 250 g Wasser pro Stunde im zweiten Hohlraum 6 und wurden durch den Abflußstutzen 14 abgezogen. Die Austrittstemperatur der (angereicherten) Salzlösung betrug 50°C, die Bestrahlungsstärke betrug 600 W/m².

## Beispiel 2

In der in Beispiel 1 beschriebenen Vorrichtung wurde eine 10gewichtsprozentige Lösung von Ethanol in Wasser behandelt. Das Trennelement hat eine der Sonnenstrahlung ausgesetzte Oberfläche von 1 m². Die Lösung nahm am Ausfluß eine Temperatur von 45° an, während die Vorlauftemperatur 5°C betrug. Dabei diffundierten 350 g Lösung pro Stunde und kondensierten im Hohlraum 6. Der Ethanolgehalt des Kondensats betrug 27,2 Gewichtsprozent, also deutlich mehr als in der Ausgangslösung.

## Patentanspruch

Vorrichtung zum Trennen von Stoffgemischen in flüssiger Phase mit Hilfe von Solarenergie in Gestalt eines flachen Hohlkörpers (1) aus flüssigkeitsdichtem Material mit Oberseite (10) und Unterseite (4), welcher Hohlkörper (1) einen ersten Hohlraum (3) enthält, dessen Unterseite von der Unterseite (4) des Hohlkörpers gebildet wird und der eine flüssigkeitsdichte Oberseite (5) besitzt; und welcher Hohlkörper (1) einen zweiten Hohlraum (6) enthält, dessen Unterseite die Oberseite (5) des ersten Hohlraums (3) ist, und dessen Oberseite (8) flüssigkeitsdicht, aber dampfdurchlässig ist; und welcher Hohlkörper (1) einen dritten Hohlraum (9) enthält, dessen Unterseite die Oberseite (8) des zweiten Hohlraumes (6) ist, und dessen Oberseite (10) die Oberseite des Hohlkörper (1) ist; welcher Hohlkörper (1) eine Anschlußvorrichtung (2) für die Flüssigkeit (12) in den ersten Hohlraum (3), ein den zweiten Hohlraum (6) überbrückendes Rohr (7) in den dritten Hohlraum (9), eine Ausflußvorrichtung (15) aus dem dritten Hohlraum (9), einen Abflußstutzen (14) aus dem zweiten Hohlraum (6) aufweist, dadurch gekennzeichnet, daß die Oberseite (10) des Hohlkörpers eine Sonnenstrahlen absorbierende Schicht trägt, und daß der erste und der dritte Hohlraum jeweils aus einem beschichteten Doppelgewebe mit Abstandhalterfäden bestehen.

## Claim

Device for separating mixtures of matter by the use of radiant solar energy, the matter being in the liquid phase, in the form of a flat, hollow body (1) having an upper wall (10) and a lower wall (4), and being constructed of a material that is liquid-tight; which hollow body (1) comprises a first cavity (3) having a lower wall constituted by the body lower wall (4) and a liquid-tight upper wall (5); which hollow body (1) comprises a second cavity (6) having as a lower wall thereof the upper wall (5) of the first cavity (3) and an upper wall (8) which is liquid-tight but vapor-permeable, and which hollow body (1) comprises a third cavity (9) having as a lower wall thereof the vapor-permeable upper wall (8) of the second cavity (6) and as an upper wall (10) thereof the body (1) upper wall; which hollow body (1) comprises a fluid inlet (2) for the fluid (12) communicating with the first cavity (3); a bridging conduit (7) bridging said second cavity (6) an communicating with said third an first cavities; a residue outlet (15) communicating with the third cavity (9); and a product outlet (14) communicating with the second cavity (6); characterized in that the upper wall (10) of the hollow body includes means for absorbing solar radiation; an each of the first and third cavities are formed of double fabric, with spacers in the form of filaments.

## Revendication

Dispositif pour séparer des mélanges de matières en phase liquide à l'aide d'énergie solaire sous la forme d'un corps creux plat (1) formé d'un matériau étanche aux liquides et comportant un côté supérieur (10) et un côté inférieur (4), ledit corps creux (1) contenant une première cavité (3) dont le côté inférieur est constitué par le côté inférieur (4) du corps creux et qui comporte un côté supérieur (5) étanche au liquide; ledit corps creux (1) comportant une seconde cavité (6) dont le côté inférieur est le côté supérieur (5) de la première cavité (3) et dont le côté supérieur (8) est étanche au liquide mais imperméable à la vapeur; ledit corps creux (1) comportant une troisième cavité (9) dont le côté inférieur est le côté supérieur (8) de la seconde cavité (6) et dont le côté supérieur (10) est le côté supérieur du corps creux (1); ledit corps creux (1) comportant un dispositif de raccordement (2) pour le liquide (12) dans la première cavité (3), un tube (7) franchissant la seconde cavité (6) et débouchant dans la troisième cavité (9); un dispositif de décharge (15) de la troisième cavité (9) et une tubulure d'évacuation (14) de la seconde cavité (6), caractérisé en ce que le côté supérieur (10) du corps creux porte une couche absorbant les rayons solaires et en ce que la première et la troisième cavité se composent chacune d'un double tissu revêtu à fils de maintien d'espace ment.